# FASCICULE DE BREVET EUROPEEN

(11) **EP 1 984 256 B1**
(45) Date de publication et mention de la délivrance du brevet: **01.07.2009**
(21) Numéro de dépôt: 07730953.2
(22) Date de dépôt: 12.02.2007
(51) Int. Cl.: B65B 35/40, B65B 35/50

(54) **PROCEDE ET INSTALLATION POUR LE GROUPAGE DE PRODUITS PALETTISABLES**
VERFAHREN UND ANLAGE ZUR MONTAGE PALETTIERBARER PRODUKTE
METHOD AND INSTALLATION FOR ASSEMBLING PALLETIZABLE PRODUCTS

(30) Priorité: 13.02.2006 FR 0601220
(43) Date de publication de la demande: 29.10.2008
(73) Titulaire: Sidel Participations, 76930 Octeville Sur Mer (FR)
(72) Inventeur: GERMAIN, Dominique, F-76930 Octeville sur Mer (FR)
(74) Mandataire: Cabinet Plasseraud
(86) Numéro de dépôt international: PCT/FR2007/000239
(87) Numéro de publication internationale: WO 2007/093694

(56) Documents cités:
- EP-A- 0 221 408
- US-A- 3 918 575
- US-A- 4 231 697
- US-A- 4 439 084
- US-A- 5 228 558
- US-A- 5 758 471

## Description

La présente invention concerne un procédé de groupage de produits en vue de leur palettisation ; elle concerne également l'installation pour la mise en oeuvre de ce procédé.

Il est tout à fait possible, aujourd'hui, de palettiser des produits automatiquement, c'est-à-dire de réaliser un chargement complet de produits sur une palette sans intervention humaine. Les techniques, dans ce domaine de la palettisation de produits, permettent de composer des couches de produits et de les installer successivement et directement sur la palette.

Une installation de ce genre est décrite dans le document US 4439084 ; elle concerne la palettisation d'articles qui sont relativement réguliers et qui sont surtout peu fragiles comme des paquets de journaux.

La palettisation automatique concerne aujourd'hui tous types de produits et il est clair que le moindre incident lors de la formation des couches et de leur installation sur la palette peut avoir des répercussions et des conséquences graves sur l'ensemble du chargement. Ainsi, par exemple, un flacon ou une bouteille qui se brise, lors de cette opération de composition de couches ou de palettisation, peut contaminer toute la palette et rendre l'ensemble des produits impropre à la vente. Cette contamination peut aussi s'étendre à l'ensemble de l'installation de palettisation en souillant les tapis, rouleaux et autres systèmes de transfert de cette installation.

De même, des produits mal positionnés dans la couche, peuvent générer, selon leur position dans le schéma de chargement, un déséquilibre plus ou moins important au niveau de la palette avec des conséquences facilement prévisibles comme le désordre à partir de la couche perturbée, voire un risque d'effondrement dudit chargement à tout moment de son existence. Ce problème se rencontre, par exemple, avec des produits du genre pack de bouteilles plastiques en raison de la forme de ces dernières dont le fond est constitué non pas d'une surface plane mais de plusieurs points d'appui ; ces produits ne sont pas très stables dans l'espace ; ils sont facilement déséquilibrés et ils ont tendance à pivoter et/ou à basculer dès qu'ils sont mis en mouvement d'une façon ou d'une autre. De plus, en cas de choc, ils peuvent se décaler les uns par rapport aux autres et passer d'une organisation en ligne à une organisation en quinconce.

Cette opération de préparation des couches de produits en vue de leur palettisation est donc une opération qui se révèle être particulièrement délicate ; de sa réussite dépend la valeur du chargement quels que soient les produits. Une palette qui est livrée avec une altération des produits a de grandes chances d'être refusée par le destinataire. C'est donc une cause de soucis très importante et une lourde responsabilité pour celui qui a cette mission de palettiser.

La présente invention propose un procédé et une installation de palettisation qui apportent des garanties de résultat peu ordinaires en supprimant les risques classiques de casse et de mauvais positionnement des produits lors de cette opération cruciale de façonnage de la couche à palettiser mais aussi lors de l'opération de transfert de la couche vers la table de palettisation.

La présente invention propose aussi un matériel qui évite, en cas de brisure de flacon(s) ou de bouteille(s), de souiller les autres produits et l'installation de palettisation.

Les perfectionnements apportés par l'invention permettent aussi d'améliorer de façon notable les cadences de palettisation avec une progression de l'ordre de 10 à 15%.

Le procédé de groupage selon l'invention, pour des produits palettisables par couches avec des couches constituées de plusieurs rangs de produits, consiste, de façon cyclique :
- à transférer un 1^{er} rang de produits entre le poste d'arrivée de ces derniers et le poste de pré-groupage, à une vitesse V;
- à transférer de la même façon un 2^{nd} rang de produits sur le poste de pré-groupage et, pour gérer l'accostage dudit 2^{nd} rang avec le rang de produits déjà en place sur ledit poste de pré-groupage, - à mettre en mouvement ledit rang en place à une vitesse v choisie entre zéro et V, en fonction du type de produits et en particulier de leur stabilité et/ou de leur capacité à absorber les chocs d'accostage, lequel mouvement du rang en place sur le poste de pré-groupage consiste essentiellement en un mouvement fuyant pour éviter un choc trop violent au moment de l'accostage du 2^{nd} rang;
- à transférer, selon le cas; un autre rang de produits sur le poste de pré-groupage, toujours à la vitesse V et - à mettre en mouvement les rangs déjà en place, comme précédemment, à une vitesse v comprise entre zéro et V pour gérer l'accostage et, lorsque le nombre de rangs est atteint, pour obtenir ladite couche;
- à transférer ladite couche au poste de palettisation, sur le poste de dépose.

Toujours selon l'invention, le procédé de groupage consiste à transférer la couche formée, entre le poste de pré-groupage et la table de dépose, par application d'une combinaison de deux mouvements :
- un mouvement d'avancement qui est réalisé directement par l'intermédiaire du support de ladite couche audit poste de pré-groupage, à une vitesse v' choisie entre zéro et V, en fonction des produits et de leur capacité à absorber des chocs, et,
- un mouvement de transfert, mis en oeuvre en même temps que le mouvement précédent, et qui est réalisé par l'intermédiaire d'un dispositif poussoir approprié, à une vitesse V' de l'ordre de V à 1,2 V.

Selon une autre disposition dé l'invention, le procédé de groupage peut également comporter, avant d'effectuer le transfert des produits entre le poste d'arrivée et le poste de pré-groupage, une étape préalable de préparation desdits produits qui consiste à les positionner et/ou les orienter en plaçant certain(s) d'entre eux à l'équerre par rapport à d'autres, selon le schéma de palettisation.

L'invention concerne également l'installation pour la mise en oeuvre du procédé tel que détaillé précédemment, laquelle installation comprend :
- un poste de préparation, au moins, qui reçoit les produits à palettiser en provenance d'un tapis de sélection ;
- un poste de pré-groupage où les produits sont disposés en rang(s) sur une table qui est susceptible d'accueillir le nombre de rangs de produits constituant la couche palettisable ;
- un poste de palettisation où s'effectue la dépose de la couche et où, par des moyens complémentaires appropriés, est réalisé l'empilage des différentes couches de produits afin de constituer une palette ;
- des moyens pour transférer les produits disposés en rangs, ou en couches, d'un poste à l'autre ;
- des moyens de contrôle et de mesure de la position desdits moyens de transfert ;
- des moyens pour régler et synchroniser les vitesses de transfert desdits produits et les gérer, en fonction des informations fournies par lesdits moyens de contrôle et de mesure et selon des critères propres à ces produits comme leur capacité à rester stables dans l'espace et leur capacité à encaisser les chocs lors de l'accostage des rangs de produits, entre eux.

Toujours selon l'invention, les moyens de transfert sont constitués de poussoirs :
- un poussoir pour les rangs de produits, lequel poussoir est mobile entre le poste de préparation et le poste de pré-groupage, et,
- un poussoir pour les couches formées, lequel poussoir est mobile entre ledit poste de pré-groupage et le poste de palettisation de la couche ;
lesquels poussoirs sont escamotables en hauteur pour circuler au-dessus desdits rangs lors de leur course retour.

Selon une autre disposition de l'invention, le poste de pré-groupage comporte un tapis sans fin motorisé avec des moyens appropriés du type moteur asynchrone qui permettent de gérer sa vitesse au moment des transferts, laquelle vitesse est établie en fonction des informations fournies par les moyens de contrôle et de mesure et elle est choisie en fonction de la nature des produits à grouper et, notamment, selon leur capacité à rester stables dans l'espace et selon leur capacité à encaisser les chocs lors de l'accostage avec d'autres rangs.

Toujours selon l'invention, le poste de pré-groupage comporte une sole plane sur laquelle repose et circule le brin supérieur du tapis sans fin de façon à offrir aux produits une surface parfaitement plane qui leur procure une très grande stabilité et une adhérence suffisante pour être entraînés par ce tapis, lequel poste comporte également, à son entrée, un capteur du genre cellule de déclenchement qui contrôle le passage des poussoirs.

Selon une autre disposition de l'invention, le tapis sans fin du poste de pré-groupage est un tapis de type modulaire en matériau thermoplastique, lequel tapis est constitué de barrettes, lesquelles barrettes sont articulées autour d'axes qui s'étendent transversalement par rapport au sens d'avancement. La surface externe de ce tapis, qui accueille et supporte les produits, est une surface continue, plane et régulière, propice à la stabilité des produits ; elle leur permet de garder l'équilibre quelle que soit la forme de leur fond, lors de leur transfert. De plus, ce tapis est perméable pour permettre l'écoulement des liquides et leur évacuation en cas de brisures ou de cassure accidentelle des produits antérieurement à leur arrivée au poste de pré-groupage.

Toujours selon l'invention, le tapis sans fin comporte, sur sa surface interne, une denture qui est façonnée autour des axes d'articulation des barrettes sur environ la moitié de l'épaisseur de ces dernières, laquelle denture permet l'enroulement dudit tapis sur des rouleaux lisses de faible diamètre, du type sabre, situés aux extrémités de la table de pré-groupage et l'entraînement dudit tapis est réalisé au moyen d'un organe moteur en forme de tambour d'engrènement sur lequel il est enroulé sur environ la moitié de la circonférence par l'intermédiaire d'un rouleau de tension, lequel tambour cranté a un diamètre de l'ordre de dix fois le pas de ladite denture, ce qui permet d'entraîner de façon précise et efficace ledit tapis pour déplacer les produits et gérer l'accostage de ces produits entre eux lors de la formation de la couche à palettiser.

Selon une autre disposition de l'invention, le poste de préparation consiste en une table constituée de rouleaux motorisés de faible diamètre, laquelle table est disposée à l'extrémité du convoyeur de sélection des produits et elle est munie de pivots et/ou de butées-cheminées qui permettent de réaliser une orientation et/ou un espacement ou blocage desdits produits selon leur position dans la couche, laquelle position est dictée par le schéma de palettisation.

Mais l'invention sera encore détaillée à l'aide de la description suivante et des dessins annexés donnés à titre indicatif, et dans lesquels :
- la figure 1 est une vue en plan schématique de l'installation de palettisation selon l'invention ;
- la figure 2 est une coupe de la figure 1 selon 2-2 ;
- la figure 3 représente une élévation schématique de la table de pré-groupage ;
- la figure 4 représente, en détail, une portion du tapis sans fin de la table représentée figure 3 ;
- la figure 5 est une vue de dessus d'une portion du tapis sans fin représenté figure 4 ;
- les figures 6 à 17 illustrent le procédé de groupage des produits pour former une couche à palettiser ;
- la figure 18 montre une variante de disposition des produits dans une couche à palettiser.

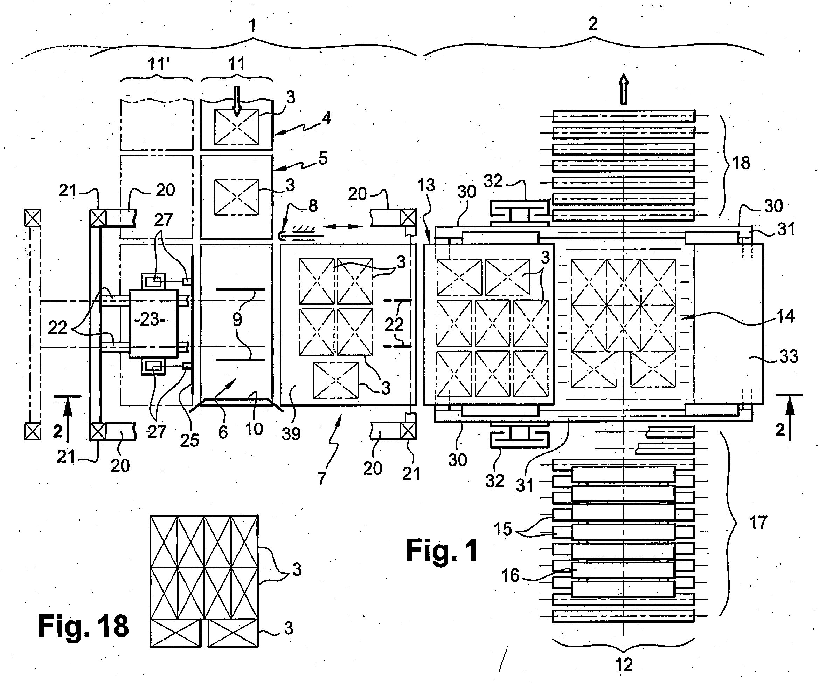

Telle que représentée figure 1, l'installation est constituée de deux grandes zones distinctes : - la zone (1) qui concerne la préparation et le pré-groupage des produits et - une zone (2) qui concerne la palettisation des couches de produits.

La zone (1) comprend une ligne (11) d'arrivée des produits (3) qui est constituée : - d'un convoyeur (4) d'amenée desdits produits (3) en accumulation, - d'un convoyeur (5) de sélection, - d'un poste (6) de préparation et, - d'un poste (7) de pré-groupage desdits produits (3).

Le convoyeur (4) d'accumulation est un convoyeur classique du type à tapis sans fin motorisé de même que le convoyeur (5) de sélection: Le poste (6) de préparation est constitué d'une table à rouleaux motorisés de faible diamètre. Ce poste de préparation est équipé de pivot(s) (8) pour orienter les produits, de butées-cheminées (9) pour les séparer et d'une butée (10) d'extrémité qui constitue la limite de cette ligne d'amenée des produits (3).

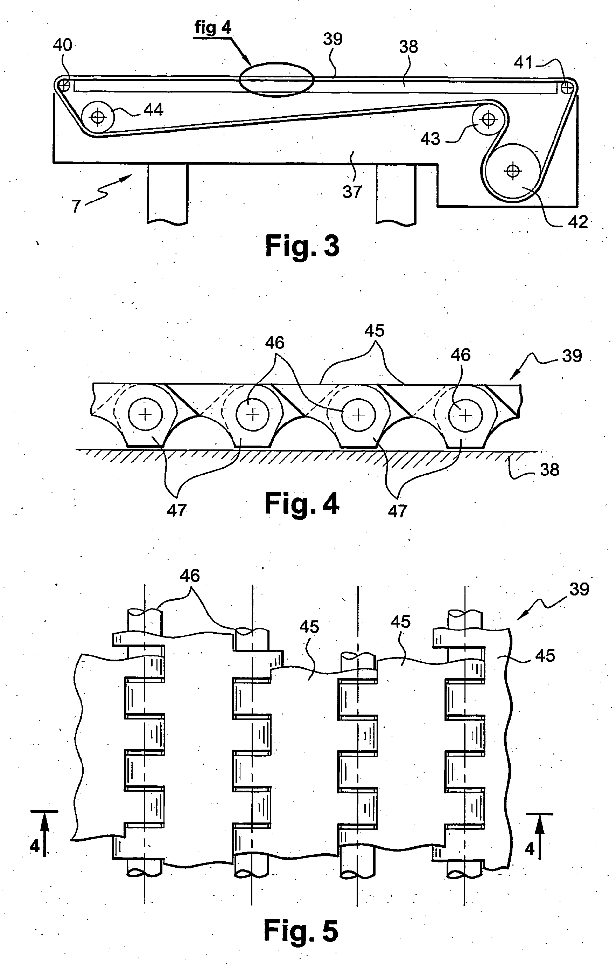

Le poste (7) de pré-groupage comprend une table qui est disposée transversalement en aval du poste (6) de préparation. Ce poste (7) sera détaillé plus loin en liaison avec les figures 3 à 5.

La zone (2) comprend : - une ligne (12) qui est parallèle à la ligne (11) d'amenée des produits (3) et, - une table (13) escamotable qui fait la jonction entre le poste (7) de pré-groupage et le poste (14) de palettisation proprement dit qui se situe sur ladite ligne (12).

La ligne (12) est constituée de rouleaux (15) motorisés sur lesquels s'effectue la circulation des palettes (16). Les palettes (16) circulent, d'une part, entre le poste (17) où elles sont stockées à vide et le poste (14) de palettisation où elles reçoivent les couches de produits (3) et, d'autre part, entre ledit poste (14) de palettisation et le poste (18) d'évacuation où elles sont évacuées avec leur chargement.

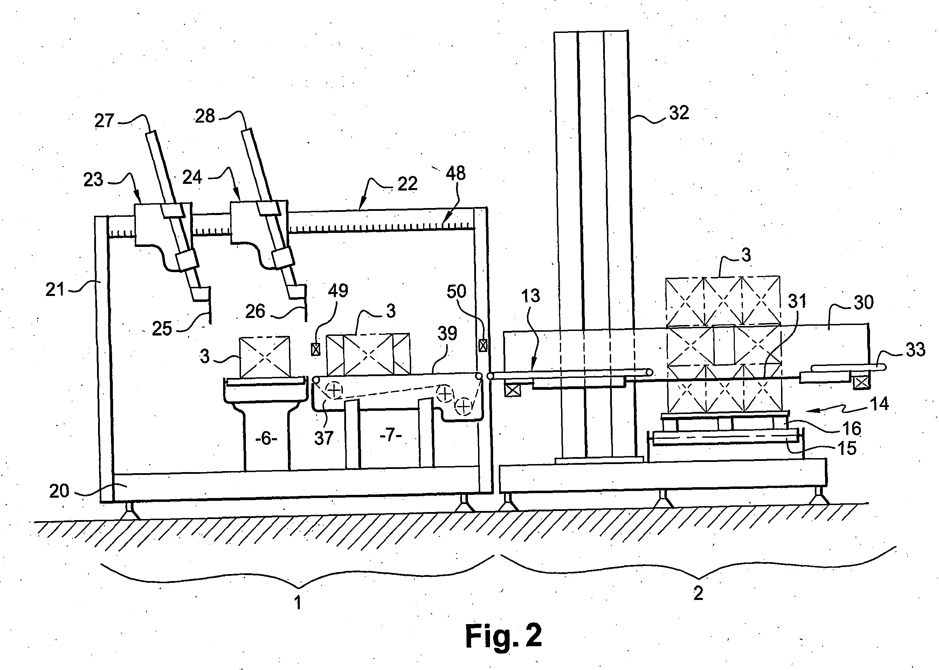

Les deux zones (1) et (2) apparaissent également sur la figure 2 qui est une élévation schématique de l'installation. On retrouve, sur cette figure 2, le poste (7) de pré-groupage qui est précédé du poste (6) de préparation. Les postes (6) et (7) sont portés par un bâti (20) et ce bâti soutient un portique (21) qui supporte des glissières (22) sur lesquelles sont montés les moyens qui permettent de réaliser le transfert des produits d'un poste à l'autre : d'une part, du poste (6) de préparation au poste (7) de pré-groupage et, d'autre part, dudit poste (7) à la table (13) escamotable qui alimente le poste (14) de palettisation.

Les moyens de transfert sont constitués de deux chariots (23) et (24) montés sur les glissières (22). Ces deux glissières (22) sont disposées perpendiculairement à la ligne (11) d'arrivée des produits (3).

Chaque chariot (23), (24) comporte un poussoir (25), (26) respectivement, et chaque poussoir est disposé à l'extrémité inférieure d'un couple de bras (27), (28) respectivement. Des moyens du type moteur asynchrone ou moteur linéaire sont prévus pour gérer les déplacements de chaque chariot et les déplacements des poussoirs correspondants.

Seul le chariot (23), avec son poussoir (25), est représenté figure 1, installé sur le couple de glissières (22).

Ainsi, comme représentés figure 1, les produits (3) qui arrivent en accumulation au niveau du convoyer (4), passent sur le tapis du convoyeur (5) de sélection, lequel tapis expédie lesdits produits (3) sur le poste (6) de préparation.

Lorsqu'ils sont positionnés correctement, au niveau du poste (6), les produits (3) sont transférés, au moyen du poussoir (25) du chariot (23), de ce poste (6) au poste (7) de pré-groupage. En quelques opérations, une couche de produits (3) est formée et cette couche est transférée, au moyen du poussoir (26), depuis le poste (7) jusque sur la table (13), laquelle table (13), détaillée ci-après, réalise ensuite la dépose de ladite couche sur la palette (16) au niveau du poste (14) de palettisation.

Cette table (13) est portée par un cadre (30) et elle est mobile sur des glissières (31) qui s'étendent au-dessus de la ligne (12). Le cadre (30) est mobile verticalement, guidé par des montants (32) pour amener la table (13) au niveau où s'effectue l'opération de déchargement des produits (3) sur la palette.

Sans entrer dans les détails, la table (13) escamotable est constituée d'une première partie, repérée (13), dont la surface correspond sensiblement à celle de la table du poste (7) de pré-groupage, et d'une seconde partie (33) dont la surface est de l'ordre de la moitié de celle de ladite table (13) ; ces deux tables (13) et (33) sont guidées sur les mêmes glissières (31) et elles se rapprochent par des moyens appropriés pour, d'une part, fermer l'espace au-dessus de la palette à charger et, d'autre part, permettre le transfert d'une partie des produits (3) de ladite table (13) sur la table (33) ; ensuite, la couche est ceinturée et maintenue au moyen de cales, non représentées, pendant que les tables (13) et (33) s'escamotent, laissant les produits (3) de ladite couche se déposer par simple gravité sur la palette tout en restant guidés par lesdites cales.

Pendant l'opération de dépose de la couche de produits (3) sur la palette (16) ou sur la couche déjà en place, une autre couche se prépare au niveau du poste (7) de pré-groupage. Ce poste (7) de pré-groupage est représenté de façon plus détaillée figure 3.

Il comprend un bâti (37) qui supporte une sole (38) horizontale. Cette sole (38) sert de surface de guidage et d'appui pour un tapis (39) sans fin qui est tendu entre des rouleaux (40) et (41) situés aux extrémités du poste (7) de pré-groupage. Ces rouleaux (40) et (41) sont du type sabre ; ils ont un diamètre très faible pour faciliter les transferts des produits (3) d'un poste à l'autre. Le rouleau (40) est situé du côté de la table (6) de préparation et le rouleau (41) est situé du côté de la table (13) escamotable.

Le tapis (39) est entraîné par un organe moteur en forme de tambour (42) situé en aval du rouleau (40) et il est tendu par deux autres rouleaux (43) et (44). Le rouleau (43) qui est situé en aval du tambour (42) sert également à enrouler le tapis (39) sur la moitié de la périphérie dudit tambour (42).

Le tapis (39) est du type modulaire, réalisé en matériau thermoplastique. Il est représenté, vu de côté, figure 4, et vu de dessus, figure 5. Il est constitué de barrettes (45) crénelées qui s'emboîtent les unes dans les autres, assemblées et articulées entre elles au moyen d'axes (46). La surface externe des barrettes (45) est plane et l'assemblage de ces barrettes est tel que, d'une manière générale, l'ensemble de la surface d'appui pour les produits est très régulier et plan. Cette surface est bien adaptée à tous types de produits (3) et en particulier aux packs de bouteilles plastiques dont le fond est en forme de « tulipe ».

Cette surface régulière procure une meilleure assise pour les produits et améliore la stabilité de ces packs. Ce tapis présente aussi l'avantage d'être perméable de façon à permettre l'évacuation de liquide en cas de casse. La sole (38) qui supporte le brin supérieur du tapis (39) peut être aménagée également pour faciliter l'écoulement et l'évacuation des liquides.

La surface interne du tapis (39) est crantée, formant une denture (47). Cette denture est façonnée autour des axes (46) et sa profondeur est de l'ordre de la moitié de l'épaisseur dudit tapis. Cette denture (47) engrène avec le tambour (42) dont la périphérie est aménagée en conséquence. En fait, ce tambour (42) peut aussi consister en plusieurs roues dentées réparties sur toute la largeur du tapis (39).

La forme de la denture (47) permet aussi d'enrouler le tapis sur les rouleaux (40) et (41) d'extrémité. Le diamètre de ces rouleaux d'extrémité peut être de l'ordre du pas de la denture (47).

Le tambour (42) est motorisé par des moyens appropriés, du genre moteur asynchrone, pour entraîner le tapis (39) à la vitesse souhaitée ; son diamètre est de l'ordre de dix fois le pas de la denture (47). Le fait d'entraîner les produits (3) qui sont sur le tapis (39) de pré-groupage permet de gérer leur accostage avec les produits en provenance du poste (6) de préparation lors de leur transfert sur ledit tapis (39) et d'éviter ainsi des chocs trop importants.

Le réglage de la vitesse du tapis (39) s'effectue par des moyens appropriés, du genre calculateur, en relation avec des informations fournies par des moyens de contrôle et de mesure de la position des moyens de transfert, c'est-à-dire des chariots (23), (24) et des poussoirs (25), (26).

Ces moyens de contrôle et de mesure apparaissent figure 2 ; ils sont constitués de capteurs : des capteurs (48) du genre codeurs qui sont disposés sur les glissières (22) et des cellules (49) et (50) de déclenchement qui sont disposées au niveau du poste (7) : une cellule (49) est située à l'entrée du tapis (39) et une cellule (50), qui fait plutôt office d'organe de sécurité, est située à l'extrémité dudit tapis (39).

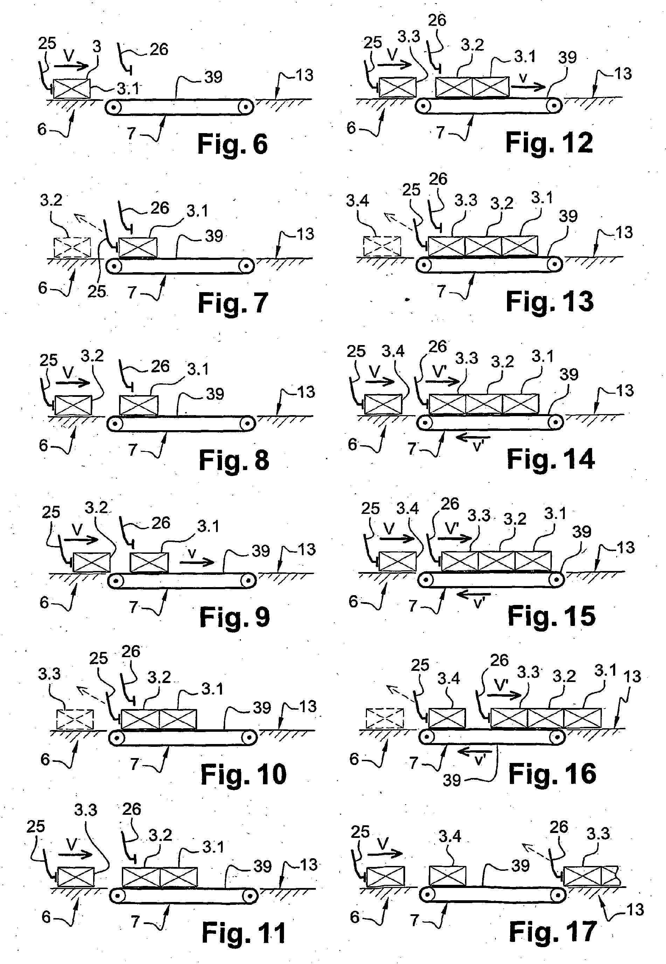

Les figures 6 à 17 explicitent les différentes étapes du procédé de pré-groupage des produits (3) selon l'invention.

On retrouve, figure 6, le poste (6) de préparation des produits (3). Le produit (3.1) est pris en charge par le poussoir (25) pour être transféré au niveau du poste (7) de pré-groupage sur le tapis (39). Toujours sur cette figure 6, on trouve aussi le poussoir (26) qui est en position inactive d'attente et on trouve la table (13) escamotable située en aval du poste (7).

La figure 7 montre le produit (3.1) qui est positionné sur le tapis (39) de pré-groupage et le poussoir (25) qui s'apprête à revenir à sa position initiale telle que représentée figure 6, en s'escamotant au-dessus du nouveau produit (3.2) en attente.

La figure 8 montre le poussoir (25) qui prend en charge le produit (3.2) à une vitesse V, pour l'amener au poste (7) de pré-groupage.

Pendant le mouvement du produit (3.2), figure 9, le produit (3.1) est déplacé, au niveau du poste (7), au moyen du tapis (39) de pré-groupage sur lequel il est posé. La vitesse v du tapis (39) est choisie en fonction des produits, de leur nature, et surtout, de leur stabilité et de leur capacité à supporter les chocs causés par l'accostage avec lés produits qui arrivent. Cette vitesse v est comprise entre zéro et V, c'est-à-dire la vitesse du poussoir (25).

La figure 10 montre les produits (3.1) et (3.2) sur le tapis (39) du poste de pré-groupage. Dans cette position, le poussoir (25) s'escamote pour revenir en position initiale et prendre en charge un nouveau produit (3.3) en attente. Ce produit (3.3) est pris en charge, comme représenté figure 11, par le poussoir (25) à une vitesse V et, comme représenté figure 12, les produits (3.1) et (3.2) qui sont sur le tapis (39) sont entraînés par ledit tapis, à une vitesse v, pour gérer l'accostage avec le nouveau produit arrivant (3.3), lequel produit (3.3) est poussé à une vitesse V par le poussoir (25).

Lorsque les trois produits (3.1, 3.2, 3.3) sont groupés sur le tapis (39) au poste (7) de pré-groupage, comme représentés figure 13, le poussoir (25) s'escamote et retourne en position initiale. Simultanément, le poussoir (26) se met en position active pour prendre en charge les trois produits (3.1, 3.2, 3.3) groupés sur le tapis (39) de pré-groupage.

La figure 14 montre, d'une part, le poussoir (25) en position active pour déplacer le produit (3.4) et, d'autre part, le poussoir (26) en position active pour emmener la couche qui est formée avec les produits (3.1, 3.2, 3.3) vers la table (13) escamotable du poste (14) de palettisation.

Le poussoir (25) évolue toujours à une vitesse V alors que le poussoir (26) peut évoluer à une vitesse légèrement supérieure comme, par exemple, une vitesse V' de l'ordre de V à 1,2 V.

Toujours figure 14, on remarque que le tapis (39) peut, lui aussi, être mis en mouvement à une vitesse v' pour entraîner directement les produits (3) en même temps que le poussoir (26), afin d'éviter des chocs entre eux sous l'effet dudit poussoir. Cette vitesse v' est choisie, comme précédemment, selon la nature des produits (3).

La figure 15 montre l'évolution de l'avancement de la couché de produits et du nouveau produit (3.4) qui est pris en charge par le poussoir (25).

On remarque, figure 16, que le nouveau produit (3.4) est mis en place sur le tapis (39) pendant que le poussoir (26) termine le transfert de la couche formée sur la table (13).

Le poussoir (25) s'escamote à nouveau pour revenir à sa position initiale et prendre en charge le nouveau produit (3.5). Dans le même temps; le poussoir (26) qui a terminé son transfert, figure 17, s'escamote pour passer au-dessus du produit (3.4) et revient dans sa position initiale telle que représentée figure 6.

Le cycle reprend ensuite dans l'état tel que représenté figure 8.

Par ce procédé de groupage, on évite les temps morts lors du transfert de la couche de produits sur la table (13) escamotable, laquelle table escamotable transfère ladite couche sur la palette.

La gestion des vitesses permet donc de gérer l'accostage entre les produits, lesquels produits se présentent soit sous une forme unitaire, soit comme représenté figure 1, sous forme de rangs placés les uns après les autres sur le tapis (39) de la table (7) de pré-groupage.

La figure 1 montre, installés sur la table (7), deux rangs de produits (3), l'un des rangs étant constitué de trois produits alors que l'autre rang est constitué simplement de deux produits. Sur la table (13), on remarque une couche complète de produits.

L'arrangement des produits, c'est-à-dire leur orientation, est réalisé comme décrit précédemment, au moyen du pivot (8) et des butées-cheminée (9).

La figure 18 montre une variante de couche qui est constituée de quatre rangs de produits disposés en couples et de deux produits complémentaires disposés différemment. Pour réaliser une couche de ce type, on peut par exemple utiliser, comme représentée en traits mixtes fins figure 1, une ligne (11') complémentaire d'amenée des produits (3) pour regrouper d'un seul coup cinq produits (3). Ce type d'installation permet de réaliser des gains notables de productivité avec des cadences supérieures de l'ordre de dix à quinze pour cent et permet surtout une amélioration des conditions de constitution des couches de produits.

## Revendications

1. Procédé de groupage de produits (3) palettisables par couches, lesdites couches étant constituées de plusieurs rangs de produits, **caractérisé en ce qu'**il consiste, de façon cyclique :
- à transférer un 1^{er} rang de produits (3) entre le poste (6) de préparation de ces derniers et le poste (7) de pré-groupage, à une vitesse V;
- à transférer de la même façon un 2^{nd} rang de produits (3) sur ledit poste (7) de pré-groupage et, pour gérer l'accostage dudit 2^{nd} rang avec le rang de produits déjà en place sur ledit poste (7) de pré-groupage, - à mettre en mouvement ledit 1^{er} rang en place à une vitesse v choisie entre zéro et V, en fonction du type de produits (3) et en particulier de leur stabilité et/ou de leur capacité à absorber les chocs d'accostage;
- à transférer, selon le cas, un autre rang de produits (3) sur le poste (7) de pré-groupage, toujours à la vitesse V et - à mettre en mouvement les deux premiers rangs comme précédemment à une vitesse v comprise entre zéro et V pour gérer l'accostage et, lorsque le nombre de rangs est atteint pour obtenir ladite couche,
- à transférer ladite couche au poste de palettisation, sur la table (13) de dépose.

2. Procédé de groupage de produits (3) palettisables par couches, selon la revendication 1, **caractérisé en ce qu'**il consiste à transférer la couche formée entre le poste (7) de pré-groupage et la table (13) de dépose, par application d'une combinaison de deux mouvements :
- un mouvement d'avancement qui est réalisé directement par l'intermédiaire du support de ladite couche, audit poste (7) de pré-groupage, à une vitesse v' choisie entre zéro et V, en fonction des produits et de leur capacité à absorber des chocs, et,
- un mouvement de transfert, qui est mis en oeuvre simultanément avec le précédent, réalisé par l'intermédiaire d'un dispositif poussoir (26) approprié, à une vitesse V'de l'ordre de V à 1,2 V.

3. Procédé de groupage de produits (3) palettisables par couches, selon l'une des revendications 1 ou 2, **caractérisé en ce qu'**il comporte, avant d'effectuer lé transfert des produits (3) entre le poste (6) de préparation et le poste (7) de pré-groupage, une étape préalable de préparation desdits produits qui consiste à les positionner et/ou les orienter en plaçant certain(s) d'entre eux à l'équerre par rapport à d'autres, selon le schéma de palettisation.

4. Installation pour la mise en oeuvre du procédé de groupage de produits (3) palettisables par couches, selon l'une quelconque des revendications 1 à 3, **caractérisée en ce qu'**elle comprend :
- un poste (6) de préparation, au moins, qui reçoit les produits (3) à palettiser en provenance d'un tapis (5) de sélection ;
- un poste (7) de pré-groupage où lesdits produits sont disposés en rang(s) sur une table (39) qui est susceptible d'accueillir le nombre de rangs de produits constituant la couche palettisable ;
- un poste (14) de palettisation où s'effectue la dépose de la couche et où, par des moyens complémentaires appropriés, est réalisé l'empilage des différentes couches de produits afin de constituer une palette ;
- des moyens pour transférer les produits disposés en rangs, ou en couches, d'un poste à l'autre ;
- des moyens de contrôle et de mesure de la position desdits moyens de transfert ;
- des moyens pour régler et synchroniser les vitesses de transfert desdits produits et les gérer selon des critères propres à ces produits comme leur capacité à rester stables dans l'espace et leur capacité à encaisser les chocs lors de l'accostage des rangs de produits entre eux, de façon à transferer un rang des produits (3) sur ledit poste (7) de pré-groupage à une vitesse V et, pour gérer l'accostage dudit rang avec un rang des produits (3) déjà en place sur ledit poste (7) de pré-groupage à mettre en mouvement ledit rang en place à une vitesse v choisie entre zéro et V.

5. Installation selon la revendication 4, **caractérisée en ce que** les moyens de transfert sont constitués de poussoirs :
- un poussoir (25) pour les rangs de produits (3), mobile entre le poste (6) de préparation et le poste (7) de pré-groupage, et,
- un poussoir (26) pour lés couches formées, mobile entre ledit poste (7) de pré groupage et la table (13) du poste (14) de palettisation de la couche ;
lesquels poussoirs (25) et (26) sont escamotables en hauteur pour circuler au-dessus desdits rangs lors de leur course retour.

6. Installation selon l'une quelconque des revendications 4 ou 5, **caractérisée en ce que** le poste (7) de pré-groupage comporte un tapis (39) sans fin, lequel tapis est motorisé avec des moyens appropriés du type moteur asynchrone pour gérer sa vitesse au moment des transferts, laquelle vitesse est établie en fonction des informations fournies par les moyens de contrôle et de mesure et elle est choisie en fonction de la nature des produits (3) à grouper et, notamment, selon leur capacité à rester stables dans l'espace et selon leur capacité à encaisser les chocs lors de l'accostage avec d'autres rangs.

7. Installation selon la revendication 6, **caractérisée en ce que** le poste (7) de pré-groupage comporte une sole (38) plane sur laquelle repose et circule le brin supérieur du tapis (39) sans fin de façon à offrir aux produits (3) une surface parfaitement plane qui leur procure une très grande stabilité et une adhérence suffisante pour être entraînés par ce tapis, lequel poste (7) comporte aussi, au moins à son entrée, un capteur du genre cellule (49) de déclenchement qui contrôle le passage des poussoirs (25), (26).

8. Installation selon l'une quelconque des revendications 6 ou 7, **caractérisée en ce que** le tapis (39) sans fin du poste (7) de pré-groupage est un tapis de type modulaire en matériau thermoplastique, lequel tapis est constitué de barrettes (45) articulées autour d'axes (46) qui s'étendent transversalement par rapport au sens d'avancement dudit tapis (39) et sa surface externe, qui accueille et supporte les produits, est une surface continue, plane et régulière.

9. Installation selon l'une quelconque des revendications 6 à 8, **caractérisée en ce que** le tapis (39) sans fin comporte, sur sa surface interne, une denture (47) qui est façonnée autour des axes (46) d'articulation des barrettes (45) sur environ la moitié de l'épaisseur de ces dernières, laquelle denture (47) permet l'enroulement dudit tapis (39) sur des rouleaux (40) et (41) lisses de faible diamètre, du type sabre, situés aux extrémités de la table (7) de pré-groupage et l'entraînement dudit tapis (39) est réalisé au moyen d'un organe moteur en forme de tambour (42) d'engrènement sur lequel il est enroulé sur environ la moitié de la circonférence par l'intermédiaire d'un rouleau (43) de tension, lequel tambour (42) a un diamètre de l'ordre de dix fois le pas de ladite denture (47).

10. Installation selon l'une quelconque des revendications 4 à 9, **caractérisée en ce que** le poste (6) de préparation consiste en une table constituée de rouleaux motorisés de faible diamètre, laquelle table est disposée à l'extrémité du convoyeur (5) de sélection des produits (3) et elle est munie de pivots (8) et/ou de butées-cheminées (9) qui permettent de réaliser une orientation et/ou un espacement ou blocage desdits produits (3) selon leur position dans la couche, laquelle position est dictée par le schéma de palettisation.

## Claims

1. A method for assembling products (3) palletizable in layers, the said layers consisting of several rows of products, **characterized in that** it consists in cyclically:
- transferring a first row of products (3) between the station (6) for preparing the said products and the preassembly station (7) at a speed V;
- transferring in the same way a second row of products (3) onto the said preassembly station (7) and, in order to manage docking of the said second row next with the row of products already in position on the said preassembly station (7), moving the said first row in position at a speed v chosen between zero and V, depending on the type of product (3) and in particular their stability and/or their capacity to withstand the docking impacts;
- transferring, as required, another row of products (3) onto the preassembly station (7), again at the speed V, and moving the first two rows, as above, at a speed v of between zero and V in order to manage the docking movement and, when the number of rows is reached in order to obtain the said layer,
- transferring the said layer to the palletization station, on the deposition table (13).

2. The method for assembling products (3) palletizable in layers, as claimed in claim 1, **characterized in that** it consists in transferring the formed layer, between the preassembly station (7) and the deposition table (13), by applying a combination of two movements:
- an advancing movement which is performed directly by means of the support for the said layer, at the said preassembly station (7), at a speed v' chosen between zero and V, depending on the products and their capacity to withstand impacts, and
- a transfer movement, performed at the same time as the previous movement and effected by means of a suitable pusher device (26) at a speed V' equal to about V to 1.2 V.

3. The method for assembling products (3) palletizable in layers as claimed in one of claims 1 or 2, **characterized in that** it involves, before transfer of the products (3) between the preparation station (6) and the preassembly station (7), a prior stage involving preparation of the said products which consists in positioning them and/or orienting them by placing some of them at right angles in relation to others, in accordance with the palletization layout.

4. An installation for implementing the method for assembling products (3) palletizable in layers, as claimed in any one of claims 1 to 3, **characterized in that** it comprises:
- one preparation station (6), at least, which receives the products (3) to be palletized arriving from a sorting belt (5);
- a preassembly station (7) where the said products are arranged in a row or rows on a table (39) which is able to receive the number of rows of products forming the palletizable layer;
- a palletization station (14) where deposition of the layer is performed and where, by means of suitable complementary means, stacking of the different layers of products is performed so as to form a pallet;
- means for transferring the products arranged in rows, or in layers, from one station to another;
- means for monitoring and measuring the position of the said transfer means;
- means for adjusting and synchronizing the transfer speeds of the said products and managing them in accordance with criteria characteristic of these products such as their capacity to remain stable in space and their capacity to withstand impacts when the rows of products are docked next to each other, so as to transfer a row of products (3) onto said preassembly station (7) at a speed V and, in order to manage docking of the said row next with a row of products (3) already in position on the said preassembly station (7), moving the said row in position at a speed v chosen between zero and V.

5. The installation as claimed in claim 4, **characterized in that** the transfer means consist of pushers:
- a pusher (25) for the rows of products (3), movable between the preparation station (6) and the preassembly station (7); and
- a pusher (26) for the formed layers, movable within the said preassembly station (7) and the table (13) of the station (14) for palletization of the layer;
- which pushers (25) and (26) are retractable heightwise so as to move above the said rows during their return travel movement.

6. The installation as claimed in any one of claims 4 or 5, **characterized in that** the pre-assembly station (7) has an endless belt (39), which belt is motor-driven with suitable means of the asynchronous motor type so as to manage its speed at the moment of transfers, which speed is determined depending on the information provided by the monitoring and measuring means and is chosen depending on the nature of the products (3) to be assembled and in particular on their capacity to remain stable in space and their capacity to withstand impacts when docked next to other rows.

7. Installation as claimed in claim 6, **characterized in that** the preassembly station (7) comprises a flat bed (38) on which the upper section of the endless belt (39) rests and travels so as to offer the products (3) a surface which is perfectly flat, providing them with a very high stability and adequate grip such that they may be conveyed by this belt, this station (7) also comprising, at least at its entry point, a trigger cell type sensor (49) which controls the passing movement of the pushers (25), (26).

8. The installation as claimed in any one of claims 6 or 7, **characterized in that** the endless belt (39) of the preassembly station (7) is a belt of the modular type made of thermoplastic material, which belt is composed of bar sections (45) hinged about spindles (46) which extend transversely with respect to the feeding direction of the said belt (39), and its outer surface, which receives and supports the products, is a continuous, flat and uniform surface.

9. The installation as claimed in any one of claims 6 to 8, **characterized in that** the endless belt (39) has, on its inner surface, a toothing (47) which is formed around the hinging spindles (46) of the bar sections (45) over about half the thickness of the latter, which toothing (47) allows the said belt (39) to be wound around smooth small-diameter rollers (40) and (41), of the "saber blade" type, situated at the ends of the preassembly table (7) and driving of the said belt (39) is performed by means of a driving member in the form of a meshing drum (42) on which it is wound over about half of the circumference by means of a tensioning roller (43), which drum (42) has a diameter in the region of ten times the pitch of the said toothing (47).

10. The installation as claimed in any one of claims 4 to 9, **characterized in that** the preparation station (6) consists of a table formed by small-diameter motor-driven rollers, which table is arranged at the end of the product sorting conveyor (5) and is provided with pivots (8) and/or travel stops (9) which allow orientation and/or spacing or fixing of the said products (3) in their position in the layer, which position is determined by the palletization layout.

## Patentansprüche

1. Verfahren zum Anordnen von lagenweise palettierbaren Produkten (3), wobei die Lagen von mehreren Produktreihen gebildet werden, **dadurch gekennzeichnet, dass** es darin besteht, taktweise:
- eine 1. Reihe von Produkten (3) zwischen der Station (6) zu ihrer Vorbereitung und der Vorgruppierstation (7) mit einer Geschwindigkeit V zu befördern,
- auf dieselbe Weise eine 2. Reihe von Produkten (3) zu der Vorgruppierstation (7) zu befördern und, um das Anstoßen der 2. Reihe an die Produktreihe, die sich bereits auf der Vorgruppierstation (7) an ihrer Stelle befindet, zu steuern, diese an ihrer Stelle befindliche 1. Reihe mit einer Geschwindigkeit v zu bewegen, die in Abhängigkeit von der Art der Produkte (3) und insbesondere von deren Stabilität und/oder deren Vermögen, die Stöße beim Anstoßen aufzunehmen, zwischen Null und V ausgewählt ist,
- gegebenenfalls eine weitere Reihe von Produkten (3) zu der Vorgruppierstation (7), weiterhin mit der Geschwindigkeit V, zu befördern und die zwei ersten Reihen wie zuvor mit einer Geschwindigkeit v zwischen Null und V zu bewegen, um das Anstoßen zu steuern, und wenn die Anzahl der Reihen erreicht ist, um diese Lage zu erhalten, und
- diese Lage zu der Palettierstation auf den Ablagetisch (13) zu befördern.

2. Verfahren zum Anordnen von lagenweise palettierbaren Produkten (3) nach Anspruch 1, **dadurch gekennzeichnet, dass** es darin besteht, die gebildete Lage zwischen der Vorgruppierstation (7) und dem Ablagetisch (13) durch Anwendung einer Kombination von zwei Bewegungen:
- einer Vorwärtsbewegung, die direkt über den Träger dieser Lage, bei der Vorgruppierstation (7) mit einer Geschwindigkeit v', die zwischen Null und V in Abhängigkeit von den Produkten und deren Vermögen, Stöße aufzunehmen, gewählt wird, realisiert wird, und
- einer Förderbewegung, die gleichzeitig mit der vorhergehenden ausgeführt und über eine geeignete Drückeinrichtung (26) mit einer Geschwindigkeit V' von etwa V bis 1,2V realisiert wird,
zu befördern.

3. Verfahren zum Anordnen von lagenweise palettierbaren Produkten (3) nach Anspruch 1 oder 2, **dadurch gekennzeichnet, dass** es, bevor die Beförderung der Produkte (3) zwischen der Vorbereitungsstation (6) und der Vorgruppierstation (7) durchgeführt wird, eine vorhergehende Stufe der Vorbereitung dieser Produkte umfasst, die darin besteht, sie zu positionieren und/oder auszurichten, indem gemäß dem Palletierschema eines/einige davon rechtwinklig zu anderen angeordnet wird/werden.

4. Vorrichtung für die Durchführung des Verfahrens zum Anordnen von lagenweise palettierbaren Produkten (3) nach einem der Ansprüche 1 bis 3, **dadurch gekennzeichnet, dass** sie:
- mindestens eine Vorbereitungsstation (6), die die zu palettierenden Produkte (3), die von einem Auswahlband (5) kommen, aufnimmt,
- eine Vorgruppierstation (7), wo diese Produkte zu einer oder mehreren Reihen auf einem Tisch (39) angeordnet werden, der in der Lage ist, die Anzahl Produktreihen aufzunehmen, die die palettierbare Lage bilden,
- eine Palettierstation (14), wo die Lage abgelegt wird und durch geeignete ergänzende Mittel die einzelnen Produktlagen gestapelt werden, um eine Palette zu bilden,
- Mittel, um die zu Reihen oder Lagen angeordneten Produkte von einer Station zur nächsten zu befördern,
- Mittel, um die Position der Fördermittel zu kontrollieren und zu messen, und
- Mittel, um die Fördergeschwindigkeiten dieser Produkte zu regeln und zu synchronisieren und sie gemäß Kriterien, die diesen Produkten eigen sind, wie ihrem Vermögen, im Raum stabil zu bleiben, und ihrem Vermögen, die Stöße beim Anstoßen der Produktreihen aneinander aufzunehmen, derart zu steuern, dass eine Reihe aus Produkten (3) zu der Vorgruppierstation (7) mit der Geschwindigkeit V befördert wird, und, um das Anstoßen dieser Reihe an eine Reihe aus Produkten (3), die sich bereits an ihrer Stelle auf der Vorgruppierstation (7) befindet, zu steuern, diese an ihrer Stelle befindliche Reihe mit einer Geschwindigkeit v, die zwischen Null und V gewählt worden ist, zu bewegen,
umfasst.

5. Vorrichtung nach Anspruch 4, **dadurch gekennzeichnet, dass** die Fördermittel von Drückeinrichtungen:
- einer Drückeinrichtung (25) für die Reihen aus Produkten (3), die zwischen der Vorbereitungsstation (6) und der Vorgruppierstation (7) beweglich ist, und
- einer Drückeinrichtung (26) für die gebildeten Lagen, die zwischen der Vorgruppierstation (7) und dem Tisch (13) der Station (14) für das Palettieren der Lage beweglich ist,
gebildet werden, wobei die Drückeinrichtungen (25) und (26) in der Höhe entfernbar sind, um während ihres Rückwegs oberhalb der Reihen zu laufen.

6. Vorrichtung nach Anspruch 4 oder 5, **dadurch gekennzeichnet, dass** die Vorgruppierstation (7) ein endloses Förderband (39) umfasst, das mit geeigneten Mitteln vom Typ Asynchronmotor motorgetrieben ist, um seine Geschwindigkeit zum Zeitpunkt der Fördervorgänge zu steuern, wobei die Geschwindigkeit in Abhängigkeit von Informationen, die von den Kontroll- und Messmitteln geliefert werden, eingestellt und in Abhängigkeit vom Charakter der anzuordnenden Produkte (3) und insbesondere entsprechend ihres Vermögens, im Raum stabil zu bleiben und entsprechend ihres Vermögens, die Stöße beim Anstoßen an andere Reihen aufzunehmen, gewählt wird.

7. Vorrichtung nach Anspruch 6, **dadurch gekennzeichnet, dass** die Vorgruppierstation (7) eine ebene Platte (38) umfasst, auf welcher der Obertrum des endlosen Förderbandes (39) derart ruht und läuft, dass den Produkten (3) eine perfekt ebene Fläche geboten wird, die ihnen sehr große Stabilität und ausreichende Haftung verleiht, um von diesem Förderband vorwärtsbewegt zu werden, wobei diese Station (7) auch, mindestens an ihrem Eingang, einen Sensor vom Typ Auslösezelle (49) umfasst, der den Durchgang der Drückeinrichtungen (25), (26) steuert.

8. Vorrichtung nach Anspruch 6 oder 7, **dadurch gekennzeichnet, dass** das endlose Förderband (39) der Vorgruppierstation (7) ein modulares Förderband aus einem Thermoplast ist, das von Stegen (45) gebildet wird, die um Achsen (46) gelenkig sind, die in Bezug auf die Laufrichtung des Förderbandes (39) quer verlaufen, und seine Außenfläche, die die Produkte aufnimmt und trägt, eine ununterbrochene, ebene und regelmäßige Fläche ist.

9. Vorrichtung nach einem der Ansprüche 6 bis 8, **dadurch gekennzeichnet, dass** das endlose Förderband (39) auf seiner Innenfläche eine Zahnung (47) umfasst, die um die Gelenkachsen (46) der Stege (45) über etwa die Hälfte von deren Dicke ausgebildet ist, wobei die Zahnung (47) das Laufen des Förderbandes (39) über Rollen (40) und (41), die glatt sind, einen kleinen Durchmesser haben, vom Typ Schlagarm sind und sich an den Enden des Vorgruppiertischs (7) befinden, ermöglicht, der Antrieb des Förderbandes (39) mittels eines Antriebsorgans in Form einer Zahneingriffstrommel (42), über welche es über etwa die Hälfte des Umfangs über eine Spannrolle (43) läuft, realisiert wird und diese Trommel (42) einen Durchmesser von etwa dem 10fachen der Zahnteilung der Zahnung (47) besitzt.

10. Vorrichtung nach einem der Ansprüche 4 bis 9, **dadurch gekennzeichnet, dass** die Vorbereitungsstation (6) aus einem Tisch besteht, der von motorgetriebenen Rollen mit kleinem Durchmesser gebildet wird, am Ende des Förderers (5) für die Auswahl der Produkte (3) angeordnet und mit Zapfen (8) und/oder Weganschlägen (9) versehen ist, die es erlauben, eine Ausrichtung und/oder Beabstandung oder Blockierung der Produkte (3) gemäß ihrer Position in der Lage zu realisieren, wobei diese Position vom Palettierschema bestimmt wird.
